# EUROPEAN PATENT APPLICATION

(11) **EP 2 093 099 A2**
(43) Date of publication of application: **26.08.2009**
(21) Application number: 09001417.6
(22) Date of filing: 02.02.2009
(51) Int. Cl.: B60L 11/18, H02J 7/14

(54) **Controller for electric storage device and vehicle with controller for electric storage device**

(30) Priority: 31.01.2008 JP 2008020630
(71) Applicant: Hitachi, Ltd., Tokyo 100-8280 (JP)
(72) Inventor: Fujino, Shinichi, Tokyo 100-8220 (JP); Seto, Sadashi, Tokyo 100-8220 (JP)
(74) Representative: MERH-IP Matias Erny Reichl Hoffmann

(57) **Abstract**

A controller for an electric storage device 100, one side of which is linked with a generator or a motor generator that is rotated by power of an engine 2 to generate AC electrical power and includes a rectifier 22 that converts the AC electrical power into DC electrical power, and the other side of which is linked with an on-vehicle battery 7 and an auxiliary device 8, includes a switching element 13, an electric storage battery 11 that is connected in parallel with the switching element 13, and a control unit 600 that switches the switching element 13. The control unit 600 turns the switching element 13 ON when a state of charge of the electric storage battery 11 is greater than a state of charge necessary for starting the engine 2 and a voltage of the on-vehicle battery 7 is less than a voltage necessary for starting the engine 2.

## Description

The disclosure of the following priority application is herein incorporated by reference:
Japanese Patent Application No. 2008-20630 filed January 31, 2008

The present invention relates to a controller for an electric storage device, in particular, it relates to a controller for an electric storage device that stores regenerated energy of a vehicle such as an automobile or the like, and to a vehicle that is equipped with such a controller.

In the prior art, an electric storage device for regenerated energy in a vehicle has been proposed in which an auxiliary power supply is connected to a generator that is linked to an engine, and this auxiliary power supply is connected to a main power supply consisting of a 12V battery and electrical load such as an auxiliary device of some sort via a switch independent of a DC/DC converter (refer to Japanese Laid-Open Patent Publication No. 2004-328988). By recuperating the regenerated energy into the auxiliary power supply, this electric storage device increases the capacity for recuperated energy and enhances the efficiency of recuperation so as to improve the fuel consumption of the vehicle.

With an electric storage device for regenerated energy as described above, a conversion loss takes place in the DC/DC converter because the energy that has been recuperated to the auxiliary power supply is supplied to the main power supply via the DC/DC converter, and this causes a increase of the fuel consumption. Moreover, although it is possible to enhance the robustness in the case of a DC/DC converter fault and reduce the conversion loss of the DC/DC converter by using the switch independent of the DC/DC converter, this invites further complication of the electric storage device.

Furthermore, the negative electrode side of the auxiliarypower supply is grounded to the vehicle independently, and this is different from the ground point of the negative electrode within the DC/DC converter. Due to this, electrical current leaked by the DC/DC converter flows between the auxiliary power supply and the DC/DC converter via the chassis of the vehicle or the like, and this constitutes a cause for the generation of EMC noise.

The object of the present invention is to convert and recuperate the regenerated energy in the vehicle such as an automotive or the like with high efficiency, and moreover to provide a controller for an electric storage device and a vehicle with this controller for an electric storage device, with high reliability and EMC noise due to leak current during the conversion being reduced.

According to a first aspect of the present invention, a controller for an electric storage device, one side of which is linked with a generator or a motor generator that is rotated by power of an engine to generate AC electrical power and includes a rectifier that converts the AC electrical power into DC electrical power, and the other side of which is linked with an on-vehicle battery and an auxiliary device, comprises an arm that includes first and second switching elements connected in series, an electric storage battery that is connected in parallel with the first and second switching elements, a primary rectification capacitor that is connected in parallel with the first and second switching elements, a reactor, one end of which is connected to a connection portion at which the first and second switching elements are connected, and the other end of which is connected to an output terminal to the on-vehicle battery and the auxiliary device, a secondary rectification capacitor that is connected to the output terminal side of the reactor, and/or a control unit that switches the first switching element. In this controller for an electric storage device, the control unit turns the first switching element ON when a state of charge of the electric storage battery is greater than a state of charge necessary for starting the engine and a voltage of the on-vehicle battery is less than a voltage necessary for starting the engine.

According to a second aspect of the present invention, a controller for an electric storage device, one side of which is linked with a generator or a motor generator that is rotated by power of an engine to generate AC electrical power and includes a rectifier that converts the AC electrical power into DC electrical power, and the other side of which is linked with an on-vehicle battery and an auxiliary device, comprises an arm that includes first and second switching elements connected in series, an electric storage battery that is connected in parallel with the first and second switching elements, a primary rectification capacitor that is connected in parallel with the first and second switching elements, a reactor, one end of which is connected to a connection portion at which the first and second switching elements are connected, and the other end of which is connected to an output terminal to the on-vehicle battery and the auxiliary device, a secondary rectification capacitor that is connected to the output terminal side of the reactor, and/or a control unit that switches the first switching element. In this controller for an electric storage device, the control unit turns the first switching element continuously ON when a voltage difference between the voltage of the electric storage battery and the voltage of the on-vehicle battery is less than a predetermined value, and the control unit turns the first switching element intermittently ON when the voltage difference is greater than the predetermined value.

According to a third aspect of the present invention, the controller for an electric storage device according to the second aspect may further comprise a terminal that is installed in a vehicle body and to which the arm, the electric storage battery, the primary rectification capacitor and the secondary rectification capacitor are electrically connected.

According to a fourth aspect of the present invention, in the controller for an electric storage device according to the second aspect, it is preferable that, when the voltage of the on-vehicle battery is greater than a predetermined maximum voltage, the control unit turns the first switching element OFF to stop supply of electrical power to the on-vehicle battery and to the auxiliary device, when the voltage of the on-vehicle battery is less than the maximum voltage and the voltage difference is greater than the predetermined value, the control unit turns the first switching element intermittently ON and stops generation of the AC electrical power by the generator or the motor generator, and when the voltage of the on-vehicle battery is less than the maximum voltage and the voltage difference is less than the predetermined value, the control unit turns the first switching element continuously ON and performs control for adjusting amount of generation of the AC electrical power by the generator or the motor generator.

According to a fifth aspect of the present invention, in the controller for an electric storage device according to the second aspect, it is also preferable that, when a state of charge of the electric storage battery is greater than a state of charge necessary for starting the engine and the voltage of the on-vehicle battery is less than a voltage necessary for starting the engine, the control unit turns the first switching element ON so that electrical power from the electric storage battery is supplied to a starter that is connected to the on-vehicle battery.

According to a sixth aspect of the present invention, in the controller for an electric storage device according to any one of the first through fifth aspects, it is desirable that two of the arms and two of the reactors are provided and the phase difference between the timings at which the two first switching elements that are provided to the two arms are turned ON and OFF is made to be approximately 180°.

According to a seventh aspect of the present invention, an electricity generation and storage unit comprises a field winding type generator or motor generator that includes a field winding, is linked to an engine, is rotated by the engine to generate AC electrical power and includes a rectifier that converts the AC electrical power into DC electrical power, and an electric storage device, one side of which is linked with the generator or the motor generator, and the other side of which is linked with an on-vehicle battery and an auxiliary device. In this electricity generation and storage unit, the electric storage device comprises an arm that includes first and second switching elements connected in series, an electric storage battery that is connected in parallel with the first and second switching elements, a primary rectification capacitor that is connected in parallel with the first and second switching elements, a reactor, one end of which is connected to a connection portion at which the first and second switching elements are connected, and the other end of which is connected to an output terminal to the on-vehicle battery and the auxiliary device, a secondary rectification capacitor that is connected to the output terminal side of the reactor, and a control unit that switches the first switching element. And the control unit turns the first switching element ON when a state of charge of the electric storage battery is greater than a state of charge necessary for starting the engine and a voltage of the on-vehicle battery is less than a voltage necessary for starting the engine.

According to an eighth aspect of the present invention, an electricity generation and storage unit comprises a field winding type generator ormotor generator that includes a field winding, is linked to an engine, is rotated by the engine to generate AC electrical power and includes a rectifier that converts the AC electrical power into DC electrical power, and an electric storage device, one side of which is linked with the generator or the motor generator, and the other side of which is linked with an on-vehicle battery and an auxiliary device. In this electricity generation and storage unit, the electric storage device comprises an arm that includes first and second switching elements connected in series, an electric storage battery that is connected in parallel with the first and second switching elements, a primary rectification capacitor that is connected in parallel with the first and second switching elements, a reactor, one end of which is connected to a connection portion at which the first and second switching elements are connected, and the other end of which is connected to an output terminal to the on-vehicle battery and the auxiliary device, a secondary rectification capacitor that is connected to the output terminal side of the reactor, and a control unit that switches the first switching element. The control unit turns the first switching element continuously ON when a voltage difference between the voltage of the electric storage battery and the voltage of the on-vehicle battery is less than a predetermined value, and the control unit turns the first switching element intermittently ON when the voltage difference is greater than the predetermined value.

According to a ninth aspect of the present invention, the electricity generation and storage unit according to the eighth aspect may further comprise a terminal that is installed in a vehicle body and to which the arm, the electric storage battery, the primary rectification capacitor and the secondary rectification capacitor are electrically connected.

According to a tenth aspect of the present invention, in the electricity generation and storage unit according to the eighth aspect, it is preferable that, when a state of charge of the electric storage battery is greater than a state of charge necessary for starting the engine and the voltage of the on-vehicle battery is less than a voltage necessary for starting the engine, the control unit turns the first switching element ON so that electrical power from the electric storage battery is supplied to a starter that is connected to the on-vehicle battery.

According to an eleventh aspect of the present invention, in the electricity generation and storage unit according to the eighth aspect, it is also preferable that, when the voltage of the on-vehicle battery is greater than a predetermined maximum voltage, the control unit turns the first switching element OFF to stop supply of electrical power to the on-vehicle battery and to the auxiliary device, when the voltage of the on-vehicle battery is less than the maximum voltage and the voltage difference is greater than the predetermined value, the control unit turns the first switching element intermittently ON and stops generation of the AC electrical power by the generator or the motor generator, and when the voltage of the on-vehicle battery is less than the maximum voltage and the voltage difference is less than the predetermined value, the control unit turns the first switching element continuously ON and performs control for adjusting amount of generation of the AC electrical power by the generator or the motor generator.

According to a twelfth aspect of the present invention, in the electricity generation and storage unit according to any one of the seventh through eleventh aspects, it is desirable that two of the arms' and two of the reactors are provided and the phase difference between the timings at which the two first switching elements that are provided to the two arms are turned ON and OFF is made to be approximately 180°.

According to a thirteenth aspect of the present invention, in a vehicle equipped with the controller for an electric storage device according to any one of the first through sixth aspects, or in a vehicle equipped with the generation and storage unit according to any one of the seventh through twelfth aspects, it is preferable that, when the state of charge of the electric storage battery drops below a maximum state of charge during deceleration of the vehicle, regenerated energy is recuperated into the electric storage battery by performing regeneration control of the generator or the motor generator by controlling its field current based upon a state variable according to at least any one of the state of charge of the electric storage battery, rotational speed of the generator or the motor generator, and vehicle speed.

According to a fourteenth aspect of the present invention, in a vehicle equipped with the controller for an electric storage device according to the third aspect, or in a vehicle equipped with the generation and storage unit according to the ninth aspect, it is also preferable that the terminal is connected to the body of the vehicle.

According to a fifteenth aspect of the present invention, in the vehicle according to the thirteenth or fourteenth aspect, it is desirable that, when the state of charge of the electric storage battery rises above the maximum state of charge during deceleration of the vehicle, the field current is turned OFF to stop generation of electrical power using the regenerated energy.

According to a sixteenth aspect of the present invention, in the vehicle according to the thirteenth or fourteenth aspect, it is also desirable that, when the voltage of the on-vehicle battery rises above a maximum voltage during deceleration of the vehicle, the first switching element is turned OFF, and when the voltage of the on-vehicle battery drops below the maximum voltage during deceleration of the vehicle, the first switching element is turned intermittently ON.

According to the present invention described above, high reliability and cost reduction are achieved in a controller for an electric storage device. In addition, the fuel consumption and EMC noise are reduced in the vehicle according to the present invention such as an automotive or the like, since this vehicle is able to convert and recuperate the regenerated energy with high efficiency.

### BRIEF DESCRIPTION OF THE DRAWINGS

Fig. 1 shows a vehicle that is equipped with an electric storage device according to the present invention (Embodiment 1);
Fig. 2 shows a block diagramof an electric storage device 100 according to the present invention and of an alternator 200;
Fig. 3 shows the flow of control operation after a key of the vehicle is turned ON;
Fig. 4 shows the flow of control operation for control of generation of electricity by the alternator, when recuperation of regenerated energy is being performed after the engine of the vehicle has been started;
Fig. 5 shows the flow of an operation for controlling the alternator with the field current If, when recuperating the regenerated energy of the vehicle;
Fig. 6 shows the operation of a MOS-FET 13, when recuperating the regenerated energy of the vehicle;
Fig. 7 shows examples of transitions between various states of vehicle speed and so on in a specific condition under which the vehicle is traveling;
Fig. 8 shows examples of methods for connection of an electric storage battery 11 according to the present invention;
Fig. 9 shows an example of a block diagram of a non-insulated type electrical power conversion device according to the present invention;
Fig. 10 shows a waveform when a MOS-FET 13a goes ON and OFF, and a waveform when a MOS-FET 13b goes ON and OFF;
Fig. 11 shows another vehicle that is equipped with an electric storage device according to the present invention (Embodiment 2);
Fig. 12 shows a block circuit diagram of a motor controller 500 shown in Fig. 11;
Fig. 13 shows the flow of control operation when the engine of the vehicle shown in Fig. 11 is started;
Fig. 14 shows the flow of control operation when retrieval of regenerated energy is not being performed after the engine of the vehicle shown in Fig. 11 has been started;
Fig. 15 shows the flow of control operation for controlling an M/G (motor generator) when regenerated energy of the vehicle shown in Fig. 11 is being recuperated;
Fig. 16 shows the flow of control operation for controlling the MOS-FET when regenerated energy of the vehicle shown in Fig. 11 is being recuperated; and
Fig. 17 shows an example of a method of communication between a control device 40 of the electric storage device 100, a control circuit 54 of a motor controller, and a control unit 600 that is an upper controller than the control device 40and the control circuit 54.

### DESCRIPTION OF THE PREFERRED EMBODIMENTS

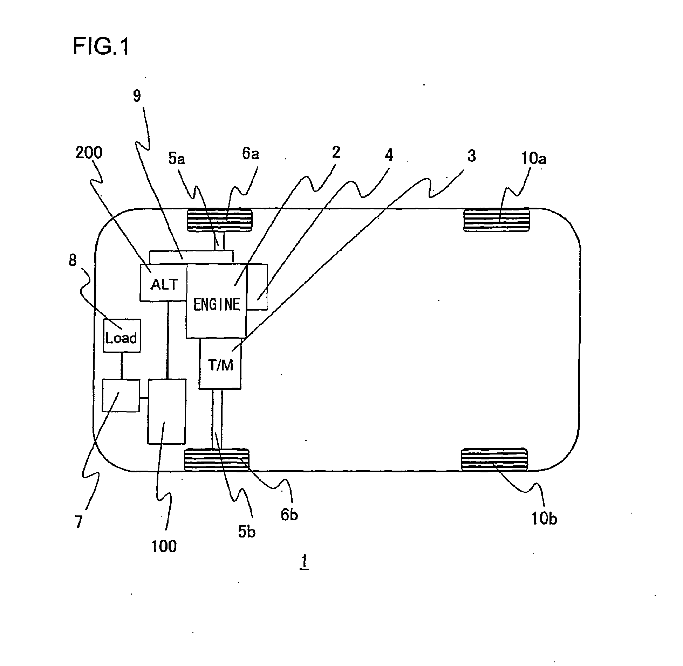

Embodiments of the present invention will now be explained with reference to Figs. 1 through 17.

### Embodiment 1

Fig. 1 shows a vehicle that is equipped with an electric storage device according to the present invention. In Fig. 1, the vehicle 1 is equipped with an engine 2. The engine 2 drives front wheels 6a and 6b via a transmission 3 and wheel axles 5a and 5b. It should be understood that the present invention is not limited to the front wheel drive vehicle shown in Fig. 1; it could also be applied to a vehicle in which the engine drives the rear wheels 10a and 10b, or to a vehicle in which all four wheels are driven, or to a truck that is equipped with six or more wheels, or to a towing vehicle such as a trailer.

An alternator 200, consisting of an AC electric motor that is linked via a belt 9 to the engine 2, is provided within the engine compartment. This alternator 200 is driven by the engine 2, and serves both to charge up an on-vehicle battery 7 and to supply power to some type of auxiliary device 8 of the vehicle that operates as a load. An electric storage device 100 is provided between the alternator 200 and the on-vehicle battery 7 and auxiliary device 8. This electric storage device 100 functions as a storage battery for electrical power generated by the alternator 200, in a similar manner to the on-vehicle battery 7, and, along with supplying the charged electrical power to the auxiliary device 8, also recuperates regenerated energy that is converted into electrical power by the alternator 200. A starter 4, that is an engine starting means, is linked to the engine 2. This starter 4 is electrically connected to the on-vehicle battery 7.

It should be understood that although, according to the above explanation, the alternator 200 is linked to the engine 2 by the belt 9, it would also be acceptable to arrange to link the alternator 200 and the engine 2 by some other means. For example, it would be acceptable to arrange to link them by a chain. Moreover, it would also be acceptable to arrange to mount the alternator 200 between the transmission 3 and the engine 2, and to link it to the crank shaft or to a shaft within the transmission 3. Furthermore, it would be acceptable for the voltage of the battery 7 to be, not 12V like an ordinary passenger car, but for example 24V or 42V. The electric storage device 100 not only may be mounted in the engine compartment, but also in the trunk or the passenger compartment or the like.

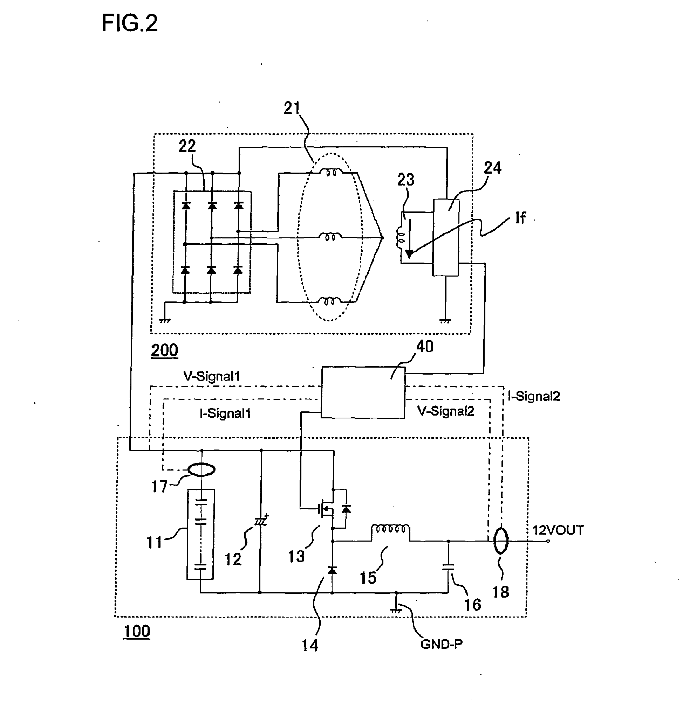

Fig. 2 shows a block diagram of an electric storage device 100 according to the present invention and of an alternator 200. As shown in Fig. 2, the alternator 200 includes a stator coil 21 having three phases, and a field coil 23 that generates a magnetic field. The three phases of the stator coil 21 are connected to a rectifier 22 that consists of diodes. This rectifier 22 converts the AC electrical power of the stator coil 21 into DC electrical power. The field coil 23 is connected to an electrical current control circuit 24 that includes a semiconductor switch. This current control circuit 24 is connected to a control device 40. The control device 40 controls the field current I_{f} of the field coil 23 via the current control circuit 24.

The current control circuit 24 is connected to the positive electrode of the rectifier 22. The current control circuit 24 receives supply of the field current If due to the DC output from the positive electrode of the rectifier 22. The negative electrode of the rectifier 22 and the current control circuit 24 are both grounded to the vehicle earth. In the alternator 200, when the magnetic field changes according to the magnitude of the field current If, the generated electrical power also changes. Due to this, the control device 40 controls the electrical power generated by the alternator 200 by controlling the field current If.

It should be understood that although, in the above example, the stator coil 21 is a three phase coil, it would also be acceptable for it to be a two phase coil, or some other number of multiple phases. Furthermore, for the rectifier 22, as well as a diode, a MOS-FET or the like could also be used.

The electric storage device 100 includes an electric storage battery 11 (a secondary battery) that consists of an ultra-capacitor, a primary rectification capacitor 12 that consists of an electrolytic capacitor, a MOS-FET 13, a diode 14, a reactor 15, and a secondary rectification capacitor 16 that consists of a film capacitor. The MOS-FET 13 and the diode 14 constitute an arm. This arm and the primary rectification capacitor 12, the reactor 15, and the secondary rectification capacitor 16 constitute a non-insulated type step-down converter. The output 12VOUT of the reactor 15 is connected to the on-vehicle battery 7 of the vehicle 1 and to the auxiliary device 8.

The electric storage battery 11 is connected in parallel with the primary rectification capacitor 12. The positive electrodes of the electric storage battery 11 and the primary rectification capacitor 12 are connected to the rectifier 22. The negative electrodes of each of the electric storage battery 11, the primary rectification capacitor 12, the diode 14, and the secondary rectification capacitor 16 are connected to a single electrical spot shown as GND-P, for example by a bus bar or the like, and grounded to the vehicle earth. Moreover, a gate output for turning the MOS-FET 13 ON and OFF is connected to the control device 40. By turning the MOS-FET 13 ON and OFF, the control device 40 converts the electrical power of the electric storage battery 11 and the electrical power generated by the alternator 200, and supplies electrical power to the on-vehicle battery 7 and the auxiliary device 8. Each of a current signal I-Signal 1 from a current sensor 17 for the electric storage battery 11, a current signal I-Signal 2 from a current sensor 18 for the output line 12VOUT, a voltage signal V-Signal 1 connected to the electric storage battery 11, and a voltage signal V-Signal 2 connected to the output line 12VOUT, is connected to the control device 40.

Due to the structure described above, it is possible for the control device 40 to recuperate the energy regenerated by the alternator 200 to the electric storage battery 11, and to control the supply of the electrical power of the alternator 200 and the electric storage battery 11 to the on-vehicle battery 7 and the auxiliary device 8. Moreover, the leak current that is generated due to the MOS-FET 13 being turned ON and OFF flows at the single electrical spot GND-P, and does not flow to any portion of the vehicle, such as for example the vehicle body frame or the like. Accordingly, it is possible to reduce EMC noise due to leak current.

Although, in the example described above, the arm is a combination of the MOS-FET 13 and the diode 14, it would also be acceptable to utilize a combination of other switching elements, for example of two MOS-FETs, or a combination of an IGBT and a diode, or the like. Furthermore, the primary rectification capacitor 12 and the secondary rectification capacitor 16 are not particularly limited to being particular types of capacitor. For example, it would also be acceptable for the primary rectification capacitor 12 to be a film capacitor, and for the secondary rectification capacitor 16 to be an electrolytic capacitor, or the like. Or it would also be possible to utilize capacitors of other types. In a similar manner, the electric storage battery 11 could also be some type other than an ultra-capacitor. For example, it would also be acceptable for it to be a capacitor unit in which a large number of electrolytic capacitors are connected in parallel, or to be a lithium ion battery or the like.

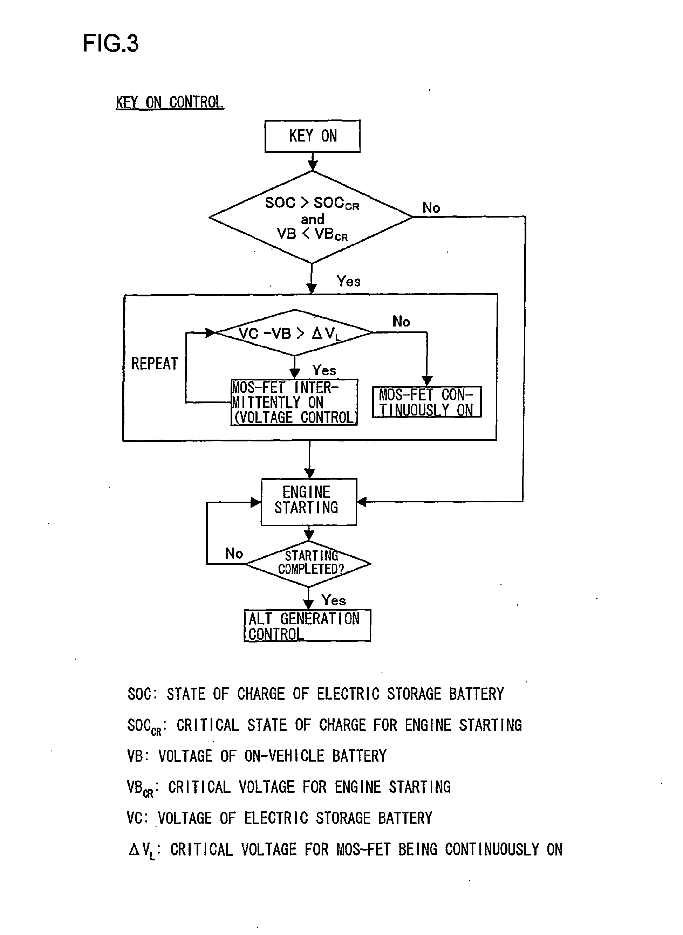

Fig. 3 shows the flow of control operation after a key of the vehicle has been turned ON. As shown by this flow, during engine starting after the key has been turned ON, the control device 40 determines the state of charge SOC of the electric storage battery 1 and the state of the voltage VB of the on-vehicle battery 7. As a result, when the state of charge SOC is greater than a critical state of charge SOC_{CR} for engine starting, and moreover the voltage VB is less than a critical voltage VB_{CR} for engine starting, then the control device 40 drives the MOS-FET 13, and supplies the electrical power of the electric storage battery 11 to the on-vehicle battery 7 and the starter 4. At this time, if the voltage difference between the electric storage battery 11 and the on-vehicle battery 7 is greater than a critical voltage ΔV_{L} for MOS-FET being continuously ON, then the control device 40 turns the MOS-FET 13 ON intermittently, in order for excessive current not to flow; while, when this voltage difference is below that critical voltage, then the control device 40 turns the MOS-FET 13 on continuously.

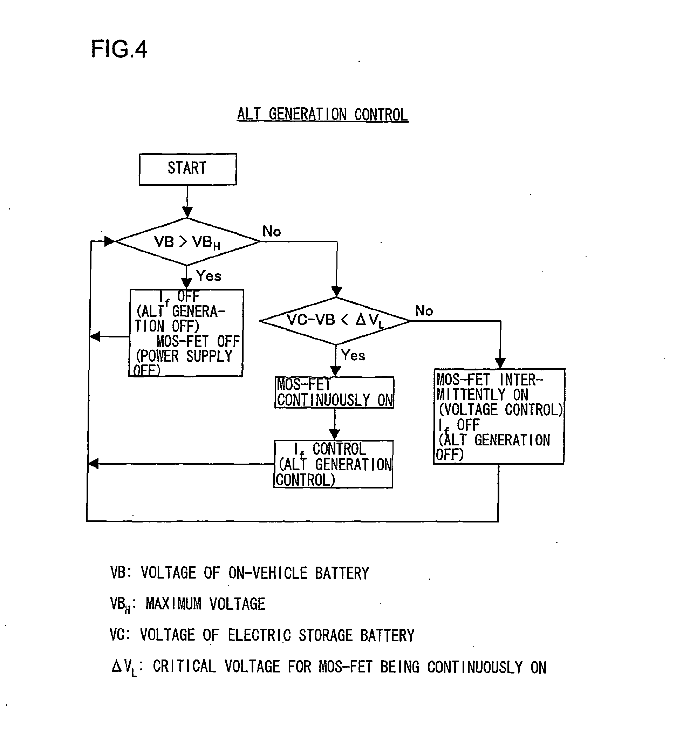

When the starter 4 is driven so as to attempt to start the engine 2, if the engine has not yet been started, this engine starting is repeated a number of times, for example around three times. After the engine has been started, a changeover is made to the alternator power generation control shown in Fig. 4. By turning the MOS-FET 13 intermittently ON, the turning ON and OFF of the MOS-FET 13 is repeated at a fixed or a fluctuating cycle. At this time, voltage control is performed so that the voltage VB of the on-vehicle battery 7 attains some value, for example so that this voltage VB attains the maximum value in the voltage range over which the on-vehicle battery 7 can be used. When the MOS-FET 13 is turned intermittently ON,the voltage difference between the electric storage battery 11 and the on-vehicle battery 7 is periodically detected, and the MOS-FET 13 is kept continuously ON, when this voltage difference has dropped below the critical voltage ΔV_{L} for MOS-FET being continuously ON.

As described above, when the voltage of the on-vehicle battery 70 is not sufficient for engine starting, the electrical power of the electric storage battery 11 is supplied to the starter 4 and to the on-vehicle battery 7. Due to this, the startability of the engine is enhanced. Furthermore, since the drive method for the MOS-FET 13 is selected to either continuously ON or intermittently ON, accordingly it is possible to reduce the switching loss of the MOS-FET 13 and the diode 14.

Fig. 4 shows the flow of control operation for control of generation of electricity by the alternator, when recuperation of regenerated energy is not being performed after the engine of the vehicle has been started. In this flow, the control device 40 monitors the voltage VB of the on-vehicle battery 7 upon some cycle. When the result is that the voltage VB exceeds the maximum voltage VB_{H} for the on-vehicle battery, then the generation of power by the alternator 200 is stopped by turning the MOS-FET 13 and the field current If OFF, so that the supply of electrical power to the on-vehicle battery 7 and the auxiliary device 8 is stopped.

When the voltage VB is less than the maximum voltage VB_{H}, then the control device 40 obtains the voltage difference between the electric storage battery 11 and the on-vehicle battery 7. When this voltage difference is greater than the critical voltage ΔV_{L} for MOS-FET being continuously ON, then voltage control for turning the MOS-FET 13 intermittently ON is performed. Furthermore, generation of power by the alternator 200 is stopped by turning the field current If OFF.

When the voltage difference between the electric storage battery 11 and the on-vehicle battery 7 is less than the critical voltage ΔV_{L} for MOS-FET being continuously ON, then the control device 40 controls the amount of power generation by the alternator 200, by turning the MOS-FET 13 continuously ON and fluctuating the field current If, so that the voltage VB of the on-vehicle battery 7 becomes some value, for example so that it keeps within the voltage range over which the on-vehicle battery 7 can be used.

By doing this, during the alternator power generation control, the generation of power by the alternator 200 is stopped when the voltage of the electric storage battery 11 is higher than the voltage of the on-vehicle battery 7 by at least the critical value for MOS-FET being continuously ON. As a result, the power in the electric storage battery 11 is consumed. As the electrical power of the electric storage battery 11 is continuously consumed, finally, the system transits to the state in which the MOS-FET 13 is continuously ON. In this manner, it is possible to reduce the switching losses of the MOS-FET 13 and the diode 14, or to ensure that such switching losses do not occur at all.

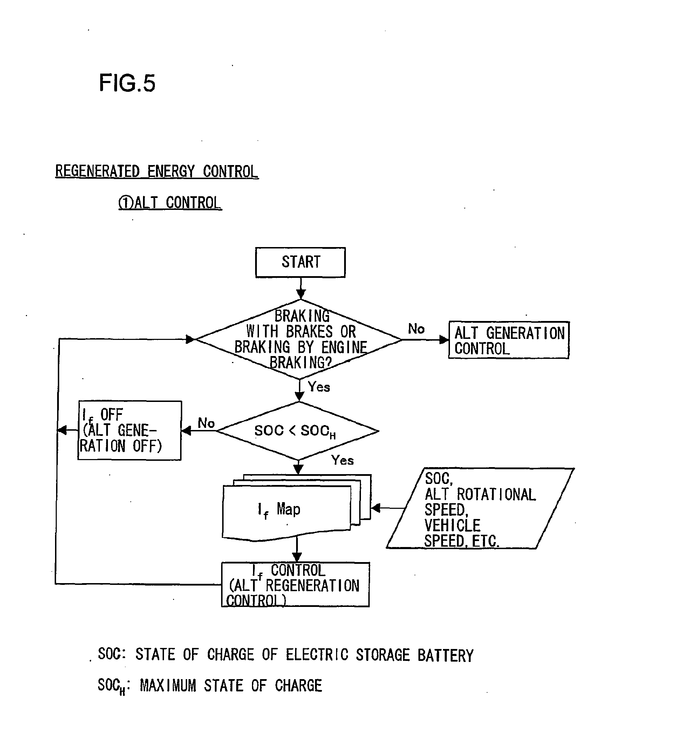

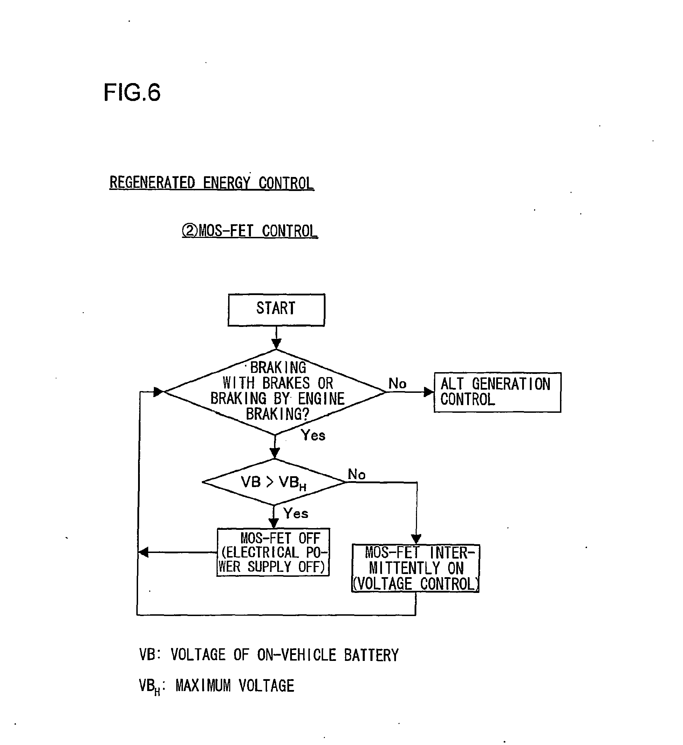

Fig. 5 and Fig. 6 show the flow of control operation when recuperating the regenerated energy of the vehicle 1. Fig. 5 shows the flow for operating the alternator 200 with the field current I_{f}. In this flow, duringbrakingof the vehicle 1 with its brakes or by engine braking, when the state of charge SOC of the electric storage battery 11 is below the maximum state of charge SOC_{H}, then the control device 40 determines, based upon a map that are stored in advance, a value to be set for the field current If according to the state of charge SOC, the rotational speed of the alternator 200, the vehicle speed, and so on. It should be understood that, in the map, information is recorded for the optimum value for the field current If according to the state of charge SOC, the rotational speed of the alternator 200, the vehicle speed, and so on. Recuperation control of the alternator 200 is performed by controlling the field current If in this manner, and the regenerated energy of the vehicle 1 is recuperated into the electric storage battery 11. Furthermore, on each period, the control device 40 monitors the state of braking of the vehicle with its brakes or by engine braking, and the state of charge SOC of the electric storage battery 11. When the result is that the braking of the vehicle with its brakes or by engine braking has ceased, then the system changes over to the alternator power generation control of Fig. 4. In addition, the field current If is turned OFF when the state of charge SOC of the electric storage battery 11 rises above the maximum state of charge SOC_{H}.

Although, in the above explanation, the map is used for determining the field current If, it would also be acceptable to provide some other means for performing this determination, for example calculation or the like.

Fig. 6 shows the operation of the MOS-FET 13. In this flow, during braking of the vehicle with its brakes or braking by engine braking, when the voltage VB of the on-vehicle battery 7 is greater than the maximum voltage VB_{H}, then the control device 40 turns the MOS-FET 13 OFF. Due to this, the supply of electrical power from the electric storage battery 11 to the on-vehicle battery 7 and the auxiliary device 8 stops. On the other hand, when the voltage VB of the on-vehicle battery 7 is less than the maximum voltage VB_{H}, then voltage control for the MOS-FET 13 being turned ON intermittently is performed. Moreover, on each period, the control device 40 monitors the state of braking of the vehicle with its brakes or by engine braking, and the state of charge SOC of the electric storage battery 11. When the result is that the braking of the vehicle with its brakes or by engine braking has ceased, then the system changes over to the alternator power generation control of Fig. 4.

By the control described above, the regenerated energy of the vehicle is recuperated directly into the electric storage battery 11. Furthermore, by turning the MOS-FET 13 intermittently ON, it is possible to keep the on-vehicle battery voltage VB at this time fixed, or within some range. Due to this, during the recuperation of regenerated energy into the electric storage battery 11, the on-vehicle battery voltage VB does not experience suppression. Accordingly, it becomes possible to recuperate regenerated energy at high capacity, and thereby the fuel consumption of the vehicle is enhanced.

While, in the above explanation, the regenerated energy is recuperated during braking with the brakes or braking using engine braking, it would also be acceptable for this to be recuperated during some other state, such as during high speed travel when the engine load is comparatively low, or the like.

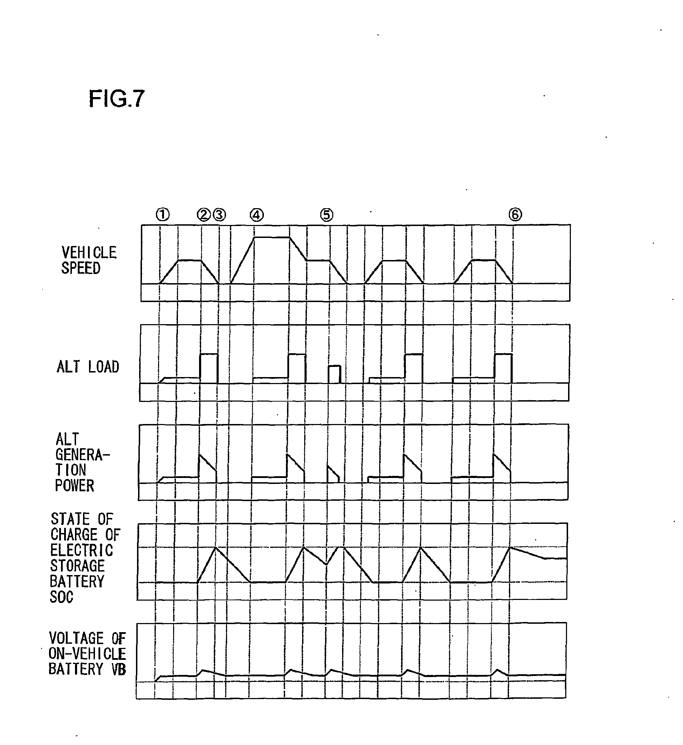

Fig. 7 shows examples of transitions of the vehicle speed, the alternator load, the electrical power generated by the alternator, the state of charge SOC of the electric storage battery, and the on-vehicle battery voltage VB, while the vehicle 1 is traveling under a specific condition. After the key is turned ON at the timing shown by the circled numeral "1", as the vehicle 1 travels while gaining speed, the alternator 200 generates electricity, and supplies electrical power to the on-vehicle battery 7 and the auxiliary device 8. The state of charge SOC of the electric storage battery 11 at this time is low, and the voltage of the electric storage battery 11 is equal to that of the on-vehicle battery 7. Accordingly, the MOS-FET 13 is continuously ON, and no electrical power conversion loss occurs.

Thereafter, the vehicle 1 starts to decelerate at the timing shown by the circled numeral "2", and stops at the timing shown by the circled numeral "3". During this period, the alternator 200 generates power at high load, and the regenerated energy of the vehicle 1 is recuperated into the electric storage battery 11. Due to this, the state of charge SOC of the electric storage battery 11 and its voltage rise. In a similar manner, the voltage of the on-vehicle battery 7 also rises. At this time, the fluctuation of the on-vehicle battery voltage VB due to the elevation of the voltage of the on-vehicle battery 7 is kept within a predetermined range, for example within a range in which no influence is exerted upon the auxiliary device 8 or the like, by the MOS-FET being turned intermittently ON. Moreover, the electric storage battery 11 does not experience any influence from the voltage of the on-vehicle battery 7, so that recuperation of the regenerated energy is possible within the range of the state of charge SOC that can be used. During this recuperation of the regenerated energy, the alternator 20 is controlled so that the load remains almost constant, or so that fluctuation of the load upon the alternator imparts almost no sense of discomfort to the persons riding in the vehicle in terms of sensing the operation of deceleration of the vehicle.

After the recuperation of the regenerated energy up to the timing shown by the circled numeral "3", the state of charge SOC of the electric storage battery 11 is high. Accordingly, generation of power by the alternator 200 is stopped, and electrical power is supplied to the on-vehicle battery 7 and the auxiliary device 8 from the electric storage battery 11. At this time, since the load upon the alternator 200 is minimum, accordingly the load upon the engine 2 is decreased and the fuel consumption of the vehicle is enhanced.

At the timing shown by the circled numeral "4", the state of charge SOC of the electric storage battery 11 becomes equal to the minimum value within the hypothesized SOC range, or to the voltage of the on-vehicle battery 7. The alternator 200 starts power generation at this timing, and supplies electrical power to the on-vehicle battery 7 and the auxiliary device 8. At this time the MOS-FET 13 becomes continuously ON, and the conversion loss of electrical power becomes zero. The above operations are repeated by the vehicle.

At the timing shown by the circled numeral "5", recuperation of the regenerated energy is performed when the state of charge SOC of the electric storage battery 11 is high. At this time, due to the control operation shown in Fig. 5, the amount of electrical power generated by the alternator 200 is set to be low as compared to when the state of charge SOC is low. As a result, control of power generation by the alternator 200 is performed so that the load during recuperation of energy remains almost constant, or so that fluctuation of the load upon the alternator imparts almost no sense of discomfort to the persons riding in the vehicle in terms of sensing the operation of deceleration of the vehicle.

At the timing shown by the circled numeral "6", the key of the vehicle is turned to OFF. After this timing, if the state of charge SOC of the electric storage battery 11 is high and the voltage of the electric storage device 11 is in a high state, for example it is greater than or equal to a voltage that is safe for the human body, thereafter the electric storage battery 11 is discharged by a discharge resistor or the like down to a predetermined voltage, for example down to a voltage that is safe for the human body. After the electric storage battery 11 has been discharged, then, this state of charge SOC is maintained so that the electric storage battery 11 is able to supply its stored electrical power to the starter 4 at the next time that the key is turned to ON and engine starting is to be performed. By the above, along with this vehicle 1 being able to recuperate regenerated energy at high capacity, the fuel consumption is also greatly enhanced, since this electrical power is utilized at high efficiency.

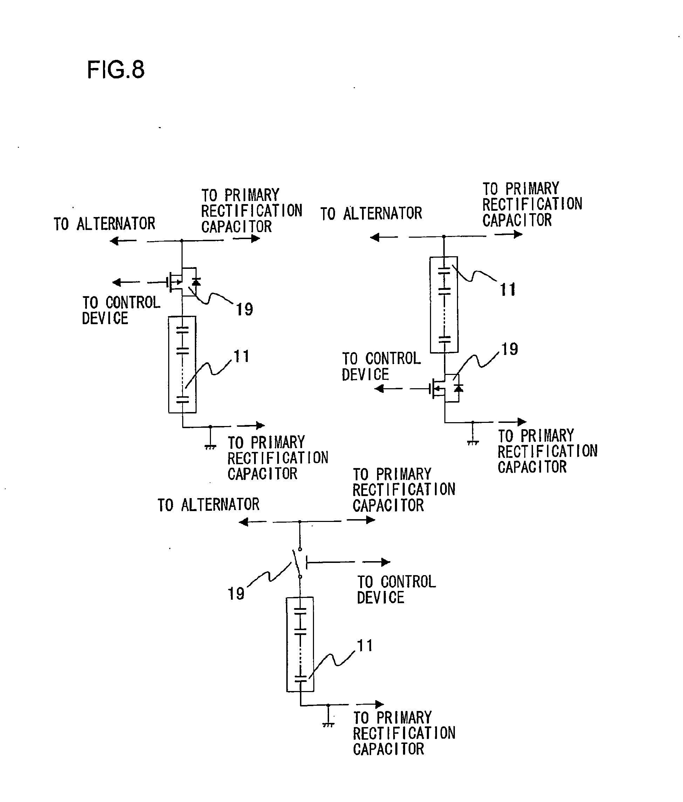

Fig. 8 shows examples of ways in which the electric storage battery 11 may be connected, according to the present invention. In the upper left of this figure, the positive electrode of the electric storage battery 11 is connected to the primary rectification capacitor 12 and the alternator 200 via the switch 19 that consists of a P-channel MOS-FET. The control signal line of the switch 19 is connected to the control device 40. In the upper right of the figure, an example is shown in which the switch 19 is an N-channel MOS-FET and is connected to the negative electrode side of the electric storage battery 11; and in the lower portion of the figure an example is shown in which the switch 19 is a mechanical switch. The electric storage battery 11 may be connected by any one of the methods described above.

The control device 40 cuts off the switch 19 when the voltage of the electric storage battery 11 goes into some anomalous state, for example when a voltage that is greater than the withstand voltage of the electric storage battery 11 is applied since two or more on-vehicle batteries in the vehicle are erroneously connected in series, or the like. Due to this, it is possible to prevent application of a voltage in a range that exceeds the withstand voltage of the electric storage battery 11. In the above explanation, instead of the switch 19, it would also be acceptable to employ some other type of switching means, such as for example an IGBT or an electromagnetic switch or the like.

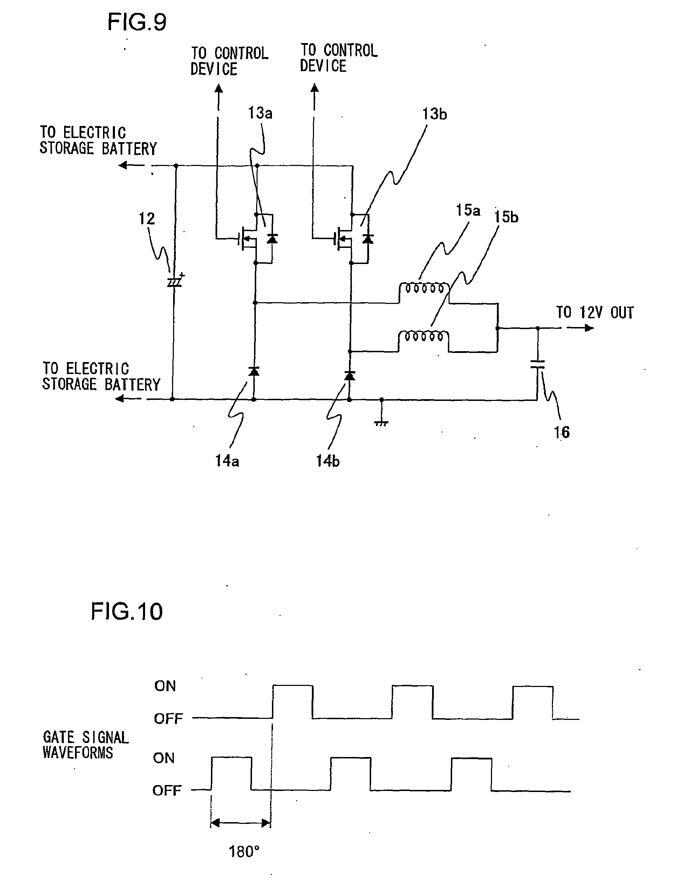

Fig. 9 shows an example of a block diagram of a non-insulated type electric power conversion device according to the present invention, in which two arms that consist of MOS-FETs 13a and 13b and diodes 14a and 14b are respectively connected to reactors 15a and 15b. The other ends of each of the reactors 15a and 15b are connected to the secondary rectification capacitor 16. The two arms are both connected in parallel to the primary rectification capacitor 12. The gates of the MOS-FETs 13a and 13b are connected to the control device 40. The control device 40 performs ON/OFF control of the MOS-FETs 13a and 13b by these gates. At this time, as shown in Fig. 10, the control device 40 performs control so that the phase difference between the ON/OFF timing of the MOS-FET 13a and the ON/OFF timing of the MOS-FET 13b is approximately 180°.

Since, by doing this, the ripple current of the secondary rectification capacitor 16 that is created by the switching of the MOS-FETs 13a and 13b becomes small, accordingly it is possible to make the secondary rectification capacitor 16 smaller. Moreover, when a problem such as, for example, a connection fault or the like has occurred with one of the MOS-FETs 13a and 13b, or with one of the diodes 14a and 14b, or with one of the reactors 15a and 15b, then it is still possible to supply the electrical power of the alternator 200 or of the electric storage battery 11 to the on-vehicle battery 7 and the auxiliary device 8, via the arm and the reactor in which no problem is occurring.

### Embodiment 2

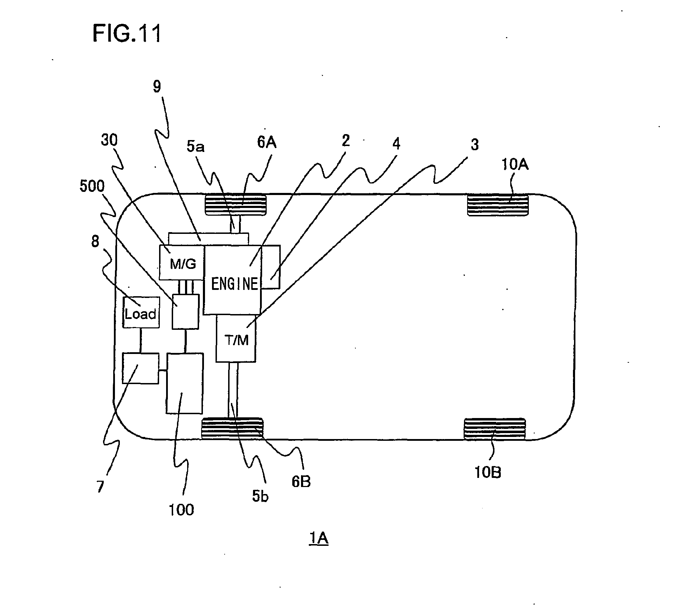

Fig. 11 shows another vehicle that is equipped with an electric storage device according to the present invention. In Fig. 11, instead of the alternator 200 of the vehicle 1 shown in Fig. 1, a motor generator 30 consisting of a three phase AC electric motor that directly drives an engine 2 or vehicle wheels 6A and 6B and also performs power generation, and a motor controller 500, are mounted to a vehicle 1A.

The motor controller 500 controls the generation by the motor generator 30 and also its drive force. Due to this control, the AC electrical power generated by the motor generator 30 is converted into DC electrical power, and thereby regenerated energy is recuperated by the electric storage device 100. Moreover, electrical power is supplied via the electric storage device 100 to the on-vehicle battery 7 and the auxiliary device 8. Furthermore, by the control performed by the motor controller 500, the DC electrical power of the electric storage device 100 or the on-vehicle battery 7 is converted into AC electrical power, and is supplied to the motor generator 30. The other structural components shown in Fig. 11 are the same as those shown in Fig. 1.

Although, in the example shown in Fig. 11, a vehicle is shown in which the engine drives the front wheels 6A and 6B, this is not to be considered as being limitative of the present invention. For example, the present invention could also be applied to a vehicle in which the engine drives the rear wheels 10A and 10B, or to a vehicle in which all four wheels are driven, or to a truck that is equipped with six or more wheels, or to a towing vehicle such as a trailer. Furthermore, while in the example of Fig. 11 the motor generator 30 is linked to the engine 2 by the belt 9, it would also be acceptable to arrange to link the motor generator 30 and the engine 2 by some other means. Forexample, it wouldbe acceptable to arrange to link them by a chain. Moreover, it would also be acceptable to arrange to mount the motor generator 30 between the transmission 3 and the engine 2, and to link it to the crank shaft or to a shaft within the transmission 3.

Furthermore, it would be acceptable for the voltage of the battery 7 to be, not 12V like an ordinary passenger car, but for example 24V or 42V. Moreover, the electric storage device 100 may not only be mounted in the engine compartment, but also in the trunk or the passenger compartment or the like. It should be understood that while, with this vehicle 1A, the engine 2 is started using the motor generator 30 or the starter 4, the present invention could also be applied to a vehicle in which only the motor generator 30 is used for starting the engine 2. In this case, the starter 4 would not need to be provided. For the motor generator 30, instead of a three phase AC electric motor, it would also be acceptable to use a two phase coil, or one having some other number of multiple phases; and, moreover, it would also be acceptable to employ a field winding type electric motor.

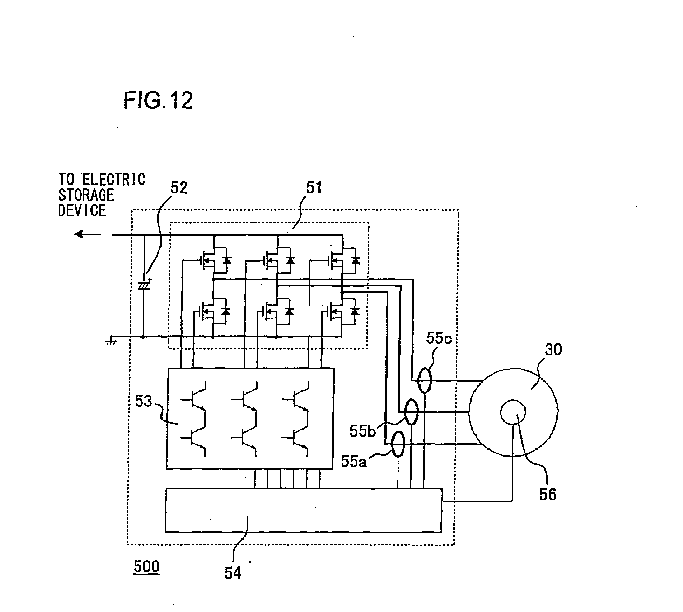

Fig. 12 shows a block circuit diagram of the motor controller 500 shown in Fig. 11. This motor controller 50 includes a semiconductor device 51 that consists of MOS-FETs, a capacitor 52 consisting of an electrolytic capacitor and connected to the DC output side of the semiconductor device, a drive circuit 53 that drives the semiconductor device 51, and a control circuit 54 that controls the drive circuit 53.

The phase coils of the motor generator 30 are connected to the semiconductor device 51. The negative electrode sides of the capacitor 52 and the semiconductor device 51 are grounded to the earth of the vehicle. The control circuit 54 receives a signal from a position sensor 56 of the motor generator 30 attached thereto and signals from current sensors 55a through 55c that detect the phase currents of the motor generator 30, and drives the semiconductor device 51 via the drive circuit 53. Due to this, the power generated by the motor generator 30 and its drive force are controlled.

Although in the above explanation, with the example shown in Fig. 12, the semiconductor 51 consists of MOS-FETs, it would also be acceptable to make it from other switching elements, for example from IGBTs and flywheel diodes. Moreover, it would also be acceptable to utilize a film capacitor or the like for the capacitor 52. While, in the example shown in Fig. 12, the number of the current sensors 55a through 55c is three, it would also be acceptable for this number to be two. Furthermore, instead of these current sensors, it would also be acceptable to utilize, for example, shunt resistors. Instead of the position sensor 56, it would also be acceptable to utilize, for example, a Hall IC. It would also be acceptable to arrange to connect the negative electrode sides of the capacitor 52 and the semiconductor device 51 to the GND-P of the electric storage device 100 shown in Fig. 2. Moreover, it would also be acceptable to arrange to utilize a field winding type electric motor for the motor generator 30, and for the motor controller 500 to use a current control circuit made from a switching element or the like, so as to control the winding line current.

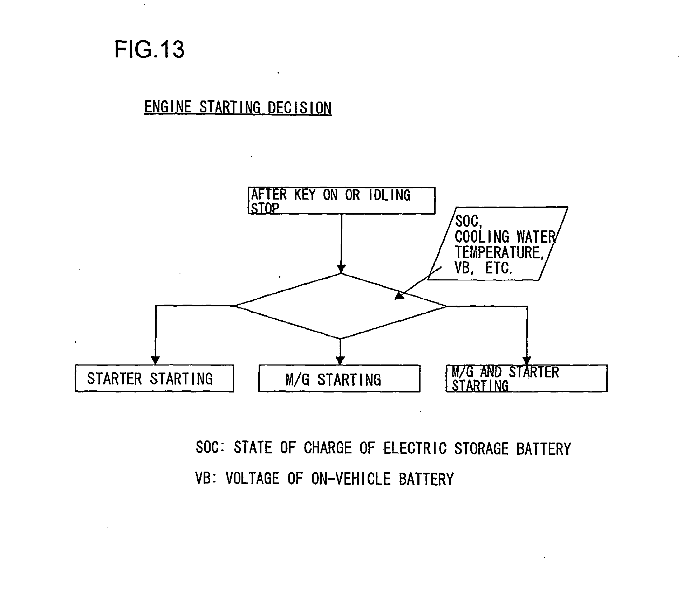

Fig. 13 shows the flow of control operation during starting of the engine of the vehicle 1A. The vehicle 1A is endowed with an idling stop function (i.e., with a function of stopping idling when the vehicle speed becomes zero) . Upon idling start after the key has been turned ON or after an idling stop, the control circuit 54 selects engine starting by any one of the starter 4, or the motor generator 30, or the starter 4 and the motor generator 30, on the basis of the SOC of the electric storage battery 11, the temperature of the cooling water of the engine 2, the voltage of the on-vehicle battery 7, and so on. For example engine starting by the motor generator 30 may be selected, when the SOC of the electric storage battery 11 is sufficient in terms of the electrical power and the drive force of the motor generator 30 that are necessary during engine starting. It should be understood that, when starting by the starter 4 has been selected, then the power of the electric storage battery 11 is supplied to the starter 4 by the same control operation as in Fig. 3. Due to this, the engine startability of the vehicle 1A is enhanced. It should be understood that this procedure could also be applied to a vehicle that is not endowed with any idling stop function.

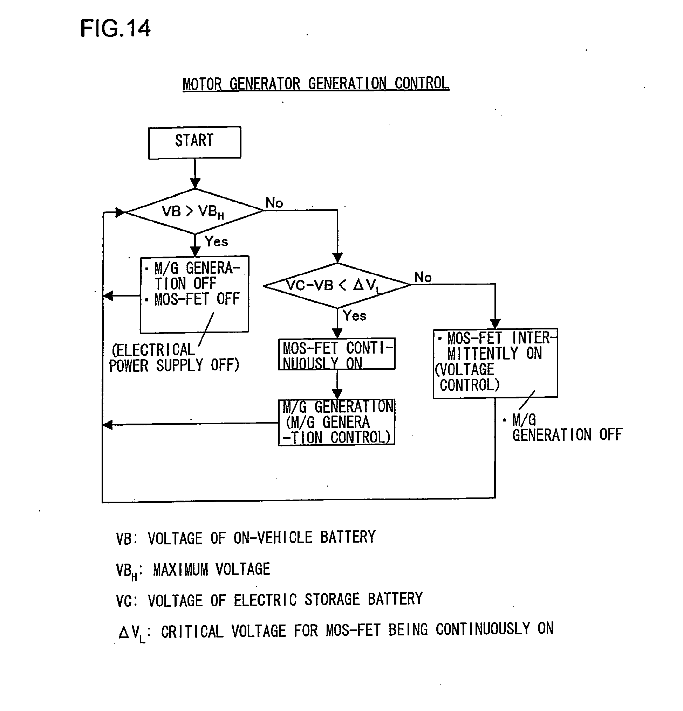

Fig. 14 shows the flow of control operation when retrieval of regenerated energy is not being performed after the engine of the vehicle 1A has been started. Here, only the alternator of Fig. 4 has been replaced by the motor generator, and the operation is the same. Due to this, the electrical energy of the electric storage battery 11 is consumed after engine starting, and when recuperation of regenerated energy is not being performed, and finally the MOS-FET 13 is kept continuously ON, and generation control of the motor generator 30 is performed. Due to this, the switching losses in the MOS-FET 13 and the diode 14 are reduced or do not occur.

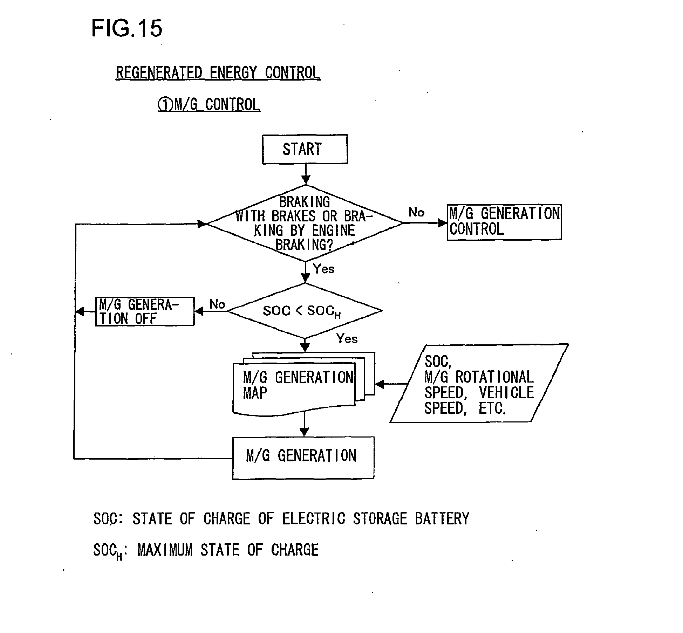

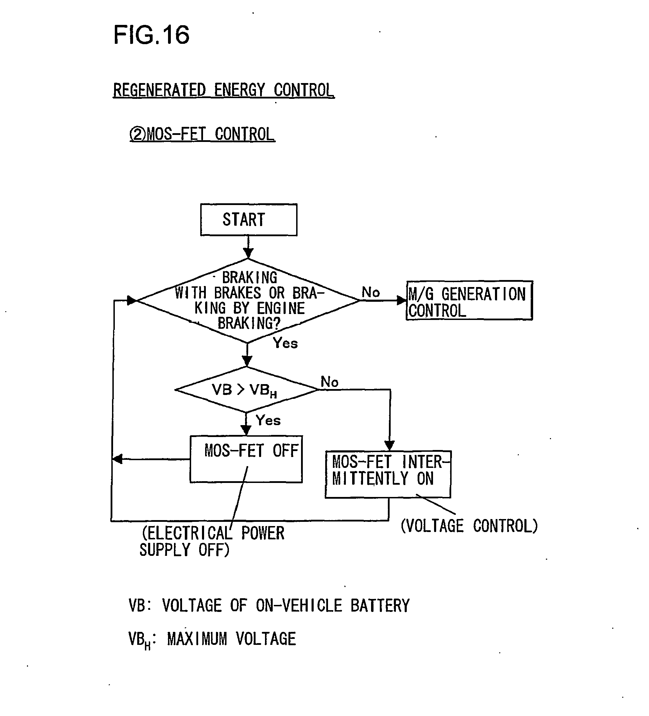

Figs. 15 and 16 show the control operation when regenerated energy of the vehicle 1A is being recuperated. Here, only the alternator of Fig. 5 has been replaced by the motor generator, and the operation is the same. The map determines the amount of electrical power generated by the motor generator. However, it would also be acceptable to arrange to perform this determination of the amount of electrical power generated by the motor generator by some means other than a map, for example by calculation.

By the above control, the regenerated energy of the vehicle is directly recuperated into the electric storage battery 11. Moreover, the on-vehicle battery voltage VB at this time can be held constant by turning the MOS-FET 13 intermittently ON. By doing this, it becomes possible to recuperate energy at high capacity, since the recuperation of energy into the electric storage battery 11 does not experience suppression by the voltage of the on-vehicle battery.

It should be understood that while, in the above explanation, the regenerated energy is recuperated during deceleration while braking with the brakes or while braking by using engine braking, it would also be acceptable to perform such recuperation in other circumstances, as during high speed travel when the engine load is comparatively low, or the like.

From the above, according to this vehicle 1A, it is possible to obtain similar advantageous effects as those obtained with the vehicle 1. In other words, the transitions of the vehicle speed, the load of the motor generator that corresponds to the alternator, the electrical power generated by the motor generator, the SOC of the electric storage battery, and the on-vehicle battery voltage, while the vehicle 1A is traveling under the specific traveling condition, are the same as those shown in Fig. 7. Due to this, it is possible to recuperate energy at high capacity, and to reduce the electrical power conversion losses. Moreover, during the period in Fig. 7 in which the vehicle speed becomes zero, the vehicle 1A is idling stopped. During engine starting when traveling is to commence, the SOC of the electric storage battery is kept in a high state due to the regenerated energy that has been recuperated, and also, in a similar manner, the voltage of the electric storage battery is kept in a high state. Accordingly, if engine starting by the motor generator 30 has been selected by the control of Fig. 13, then the voltage applied to the motor generator becomes high, so that it is possible to drive the motor generator 30 at high output. Therefore, when starting the engine after idling stop, it becomes possible to supply fuel only after having raised the engine rotational speed to, for example, the idling rotational speed of the engine; and it even becomes possible to perform traveling with the motor generator 30 before engine starting.

To this vehicle 1A, it is also possible to apply the structure shown in Figs. 8 and 9, and similar advantageous effects may be obtained.

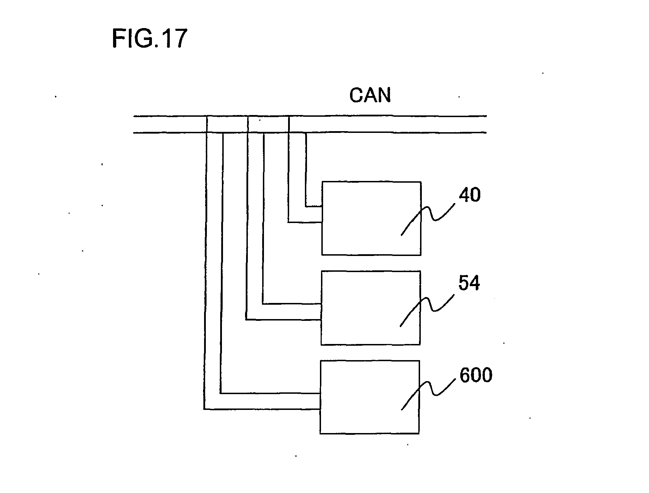

Fig. 17 is a figure showing an example of a method of communication between the control device 40 of the electric storage device 100, the control circuit 54 of the motor controller, and a control unit 600 that is an upper controller than the control device 40 and the control circuit 54. The control device 40, the control circuit 54, and the control unit 600 mutually communicate via a CAN line. Due to this, the control unit 600 is able to control the electric storage device 100 and the motor generator 30 via the control device 40 and the control circuit 54, and it is possible to perform the control operation for the vehicle 1A described above in a simple and easy manner. Although, in the above explanation, the control unit 600 is used, it is not absolutely necessary to provide this control unit 600 for controlling the electric storage device 100 and the motor generator 30. For example, it would be acceptable to arrange for the control device 40 to control the motor generator 30 via the control circuit 54, and for the control circuit 54 to control the electric storage device 100 via the control device 40. Moreover, it would also be acceptable to utilize some communication means other than CAN, for example serial communication or the like. Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A controller for an electric storage device (100), one side of which is linked with a generator or a motor generator that is rotated by power of an engine (2) to generate AC electrical power and includes a rectifier (22) that converts the AC electrical power into DC electrical power, and the other side of which is linked with an on-vehicle battery (7) and an auxiliary device (8), comprising:
an arm that includes first (13) and second (14) switching elements connected in series;
an electric storage battery (11) that is connected in parallel with the first (13) and second (14) switching elements;
a primary rectification capacitor (12) that is connected in parallel with the first (13) and second (14) switching elements;
a reactor (15), one end of which is connected to a connection portion at which the first (13) and second (14) switching elements are connected, and the other end of which is connected to an output terminal to the on-vehicle battery (7) and the auxiliary device (8);
a secondary rectification capacitor (16) that is connected to the output terminal side of the reactor (15); and
a control unit (600) that switches the first (13) switching element; wherein:
the control unit (600) turns the first (13) switching element ON when a state of charge of the electric storage battery (11) is greater than a state of charge necessary for starting the engine (2) and a voltage of the on-vehicle battery (7) is less than a voltage necessary for starting the engine (2).

2. A controller for an electric storage device (100), one side of which is linked with a generator or a motor generator that is rotated by power of an engine (2) to generate AC electrical power and includes a rectifier (22) that converts the AC electrical power into DC electrical power, and the other side of which is linked with an on-vehicle battery (7) and an auxiliary device (8), comprising:
an arm that includes first (13) and second (14) switching elements connected in series;
an electric storage battery (11) that is connected in parallel with the first (13) and second (14) switching elements;
a primary rectification capacitor (12) that is connected in parallel with the first (13) and second (14) switching elements;
a reactor (15), one end of which is connected to a connection portion at which the first (13) and second (14) switching elements are connected, and the other end of which is connected to an output terminal to the on-vehicle battery (7) and the auxiliary device (8);
a secondary rectification capacitor (16) that is connected to the output terminal side of the reactor (15); and
a control unit (600) that switches the first (13) switching element; wherein:
the control unit (600) turns the first (13) switching element continuously ON when a voltage difference between the voltage of the electric storage battery (11) and the voltage of the on-vehicle battery (7) is less than a predetermined value; and
the control unit (600) turns the first (13) switching element intermittently ON when the voltage difference is greater than the predetermined value.

3. A controller for an electric storage device (100) according to claim 2, further comprising a terminal that is installed in a vehicle body and to which the arm (13, 14), the electric storage battery (11), the primary rectification capacitor (12) and the secondary rectification capacitor (16) are electrically connected.

4. A controller for an electric storage device according to claim 2 or 3, wherein:
when the voltage of the on-vehicle battery (7) is greater than a predetermined maximum voltage, the control unit (600) turns the first (13) switching element OFF to stop supply of electrical power to the on-vehicle battery (7) and to the auxiliary device (8);
when the voltage of the on-vehicle battery (7) is less than the maximum voltage and the voltage difference is greater than the predetermined value, the control unit (600) turns the first (13) switching element intermittently ON and stops generation of the AC electrical power by the generator or the motor generator; and
when the voltage of the on-vehicle battery (7) is less than the maximum voltage and the voltage difference is less than the predetermined value, the control unit (600) turns the first (13) switching element continuously ON and performs control for adjusting amount of generation of the AC electrical power by the generator or the motor generator.

5. A controller for an electric storage device (100) according to claim 2, wherein:
when a state of charge of the electric storage battery (11) is greater than a state of charge necessary for starting the engine (2) and the voltage of the on-vehicle battery (7) is less than a voltage necessary for starting the engine (2), the control unit (600) turns the first (13) switching element ON so that electrical power from the electric storage battery (11) is supplied to a starter (4) that is connected to the on-vehicle battery (7).

6. A controller for an electric storage device (100) according to any one of claims 1 through 5, wherein:
two of the arm (13, 14) and two of the reactor (15) are provided; and
the phase difference between the timings at which the two first (13) switching elements that are provided to the two arms are turned ON and OFF is made to be approximately 180°.

7. An electricity generation and storage unit, comprising:
a field winding type generator or motor generator that includes a field winding, is linked to an engine (2), is rotated by the engine (2) to generate AC electrical power and includes a rectifier (22) that converts the AC electrical power into DC electrical power; and
an electric storage device (11), one side of which is linked with the generator or the motor generator, and the other side of which is linked with an on-vehicle battery (7) and an auxiliary device (8); wherein:
the electric storage device (11) comprises:
an arm that includes first (13) and second (14) switching elements connected in series;
an electric storage battery (100) that is connected in parallel with the first (13) and second (14) switching elements;
a primary rectification capacitor (12) that is connected in parallel with the first (13) and second (14) switching elements;
a reactor (15), one end of which is connected to a connection portion at which the first (13) and second (14) switching elements are connected, and the other end of which is connected to an output terminal to the on-vehicle battery (7) and the auxiliary device (8);
a secondary rectification capacitor (16) that is connected to the output terminal side of the reactor (15); and
a control unit (600) that switches the first (13) switching element; and
the control unit (600) turns the first (13) switching element ON when a state of charge of the electric storage battery (11) is greater than a state of charge necessary for starting the engine (2) and a voltage of the on-vehicle battery (7) is less than a voltage necessary for starting the engine (2).

8. An electricity generation and storage unit, comprising:
a field winding type generator or motor generator that includes a field winding, is linked to an engine (2), is rotated by the engine (2) to generate AC electrical power and includes a rectifier (22) that converts the AC electrical power into DC electrical power; and
an electric storage device (100), one side of which is linked with the generator or the motor generator, and the other side of which is linked with an on-vehicle battery (7) and an auxiliary device (8); wherein:
the electric storage device (100) comprises:
an arm that includes first (13) and second (14) switching elements connected in series;
an electric storage battery (11) that is connected in parallel with the first (13) and second (14) switching elements;
a primary rectification capacitor (12) that is connected in parallel with the first (13) and second (14) switching elements;
a reactor (15), one end of which is connected to a connection portion at which the first (13) and second (14) switching elements are connected, and the other end of which is connected to an output terminal to the on-vehicle battery (7) and the auxiliary device (8);
a secondary rectification capacitor (16) that is connected to the output terminal side of the reactor (15); and
a control unit (600) that switches the first (13) switching element; and
the control unit (600) turns the first (13) switching element continuously ON when a voltage difference between the voltage of the electric storage battery (11) and the voltage of the on-vehicle battery (7) is less than a predetermined value; and
the control unit (600) turns the first (13) switching element intermittently ON when the voltage difference is greater than the predetermined value.

9. An electricity generation and storage unit according to claim 8, further comprising a terminal that is installed in a vehicle body and to which the arm (13, 14), the electric storage battery (11) , the primary rectification capacitor (12) and the secondary rectification capacitor (16) are electrically connected.

10. An electricity generation and storage unit according to claim 8 or 9, wherein:
when a state of charge of the electric storage battery (11) is greater than a state of charge necessary for starting the engine (2) and the voltage of the on-vehicle battery (7) is less than a voltage necessary for starting the engine (2), the control unit (600) turns the first (13) switching element ON so that electrical power from the electric storage battery (11) is supplied to a starter (4) that is connected to the on-vehicle battery (7).

11. An electricity generation and storage unit according to claim 8, wherein:
when the voltage of the on-vehicle battery (7) is greater than a predetermined maximum voltage, the control unit (600) turns the first (13) switching element OFF to stop supply of electrical power to the on-vehicle battery (7) and to the auxiliary device (8);
when the voltage of the on-vehicle battery (7) is less than the maximum voltage and the voltage difference is greater than the predetermined value, the control unit (600) turns the first (13) switching element intermittently ON and stops generation of the AC electrical power by the generator or the motor generator; and
when the voltage of the on-vehicle battery (7) is less than the maximum voltage and the voltage difference is less than the predetermined value, the control unit (600) turns the first (13) switching element continuously ON and performs control for adjusting amount of generation of the AC electrical power by the generator or the motor generator.

12. An electricity generation and storage unit according to any one of claims 7 through 11, wherein:
two of the arm (13, 14) and two of the reactor (15) are provided; and
the phase difference between the timings at which the two first (13) switching elements that are provided to the two arms (13, 14) are turned ON and OFF is made to be approximately 180°.

13. A vehicle (1; 1A)equipped with a controller for an electric storage device (100) according to any one of claims 1 through 6, or a vehicle (1; 1A) equipped with a generation and storage unit according to any one of claims 7 through 12, wherein:
when the state of charge of the electric storage battery (11) drops below a maximum state of charge during deceleration of the vehicle (1; 1A), regenerated energy is recuperated into the electric storage battery (11) by performing regeneration control of the generator or the motor generator by controlling its field current based upon a state variable according to at least any one of the state of charge of the electric storage battery (11), rotational speed of the generator or the motor generator, and vehicle speed.

14. A vehicle (1; 1A) equipped with a controller for an electric storage device (100) according to claim 3, or a vehicle (1; 1A) equipped with a generation and storage unit according to claim 9, wherein the terminal is connected to the vehicle body of the vehicle (1; 1A).

15. A vehicle according to claim 13 or claim 14, wherein:
when the state of charge of the electric storage battery (11) rises above the maximum state of charge during deceleration of the vehicle, the field current is turned OFF to stop generation of electrical power using the regenerated energy.

16. A vehicle according to claim 13 or claim 14, wherein:
when the voltage of the on-vehicle battery (7) rises above a maximum voltage during deceleration of the vehicle (1; 1A), the first (13) switching element is turned OFF; and
when the voltage of the on-vehicle battery (7) drops below the maximum voltage during deceleration of the vehicle (1; 1A), the first (13) switching element is turned intermittently ON.
